# DEMANDE DE BREVET EUROPEEN

(11) **EP 4 755 801 A1**
(43) Date de publication de la demande: **10.06.2026**
(21) Numéro de dépôt: 25220434.2
(22) Date de dépôt: 03.12.2025
(51) Int. Cl.: B64D 37/04, B64D 37/06, B64D 37/30, F17C 1/00

(54) **AÉRONEF COMPORTANT UNE STRUCTURE, UN RÉSERVOIR ET DES MOYENS DE FIXATION DU RÉSERVOIR À LA STRUCTURE**

(30) Priorité: 05.12.2024 FR 2413527
(71) Demandeur: AIRBUS OPERATIONS (S.A.S.), 31060 Toulouse (FR)
(72) Inventeur: MERTES, Anthony, 31060 Toulouse (FR); MICHIES, Noémie, 31060 Toulouse (FR)
(74) Mandataire: Cabinet Le Guen Maillet

(57) **Abrégé**

L'invention concerne un aéronef comportant un plancher (102a), un réservoir (110) et des moyens de fixation (150) du réservoir (110) au plancher (102a). Les moyens de fixation (150) comportent des rails de guidage fixés sur le plancher (102a), un châssis (152) avec des rainures de guidage coopérant avec les rails de guidage, deux bielles arrière (158a-b) montées articulées entre le châssis (152) et le réservoir (110), deux bielles avant (156a-b) fixées au châssis (152) et montées articulées sur le réservoir (110), une bielle latérale (160) montée articulée entre le châssis (152) et une partie inférieure du réservoir (110), et deux bielles intermédiaires (162a-b) montées articulées entre le châssis (152) et le réservoir (110).

## Description

### DOMAINE TECHNIQUE

La présente invention concerne un aéronef comportant une structure, un réservoir, en particulier un réservoir de dihydrogène, et des moyens de fixation qui assurent la fixation du réservoir à la structure.

### ÉTAT DE LA TECHNIQUE ANTÉRIEURE

Dans le cas du kérosène qui est utilisé pour alimenter les moteurs d'un aéronef, il est connu d'agencer le réservoir de kérosène dans une aile de l'aéronef.

Afin de réduire la consommation de kérosène dans les moteurs d'aéronef, il est connu d'utiliser le dihydrogène comme carburant. Le réservoir qui est de forme cylindrique ne peut pas être mis dans les ailes et il est alors disposé dans le fuselage de l'aéronef.

L'aéronef comporte alors une structure à laquelle le réservoir est fixé par des moyens de fixation.

Actuellement, les moyens de fixation ne sont pas optimisés et il est donc nécessaire de trouver un nouvel arrangement. En outre, il est souhaitable de trouver un arrangement permettant de retirer aisément le réservoir de l'aéronef en cas de besoin en particulier parallèlement à l'axe longitudinal de l'aéronef.

### EXPOSE DE L'INVENTION

Un objet de la présente invention est de proposer un aéronef comportant une structure, au moins un réservoir cylindrique et des moyens de fixation qui assurent la fixation de chaque réservoir à la structure.

À cet effet, est proposé un aéronef comportant :
- un fuselage avec un plancher,
- un réservoir logé dans le fuselage au-dessus du plancher, et présentant une direction longitudinale et un plan médian longitudinal vertical,
- des moyens de fixation qui assurent la fixation du réservoir au plancher et qui comportent :
- des premiers moyens de guidage fixés sur le plancher,
- un châssis comportant des deuxièmes moyens de guidage coopérant avec les premiers moyens de guidage pour réaliser une liaison glissière parallèle à la direction longitudinale,
- à l'arrière du réservoir, de part et d'autre du plan médian longitudinal vertical, une bielle arrière dont une première extrémité est montée articulée sur le châssis et dont une deuxième extrémité est montée articulée sur le réservoir,
- à l'avant par rapport aux bielles arrière, de part et d'autre du plan médian longitudinal vertical, une bielle avant dont une première extrémité est fixée au châssis et dont une deuxième extrémité est montée articulée sur le réservoir,
- entre les bielles avant et les bielles arrière, une bielle latérale dont une première extrémité est montée articulée sur le châssis et dont une deuxième extrémité est montée articulée sur une partie inférieure du réservoir, et
- entre la bielle latérale et les bielles arrière, de part et d'autre du plan médian longitudinal vertical, une bielle intermédiaire dont une première extrémité est montée articulée sur le châssis et dont une deuxième extrémité est montée articulée sur le réservoir.

Un tel arrangement permet d'avoir des moyens de fixation qui sont optimisés en particulier pour le transfert des efforts du réservoir vers la structure ainsi que le retrait du réservoir parallèlement à l'axe longitudinal de l'aéronef.

Avantageusement, chaque bielle intermédiaire est inscrite dans un plan globalement parallèle au plancher.

Avantageusement, les bielles avant sont inscrites dans un plan perpendiculaire à la direction longitudinale.

Avantageusement, les bielles arrière sont inscrites dans un plan perpendiculaire à la direction longitudinale.

Avantageusement, la bielle latérale est inscrite dans un plan perpendiculaire à la direction longitudinale.

Avantageusement, chaque bielle est une bielle double.

Avantageusement, les premiers moyens de guidage prennent la forme de deux rails parallèles à la direction longitudinale, où chaque rail présente une âme s'étendant dans un plan perpendiculaire au plancher et parallèle à la direction longitudinale et une aile solidaire de l'âme s'étendant dans un plan parallèle au plancher, et les deuxièmes moyens de guidage prennent, pour chaque rail, la forme de deux coulisseaux montés coulissants sur ledit rail où chaque coulisseau présente une rainure arrangée pour recevoir l'âme et l'aile.

Avantageusement, les moyens de fixation comportent, pour chaque coulisseau, un premier axe de verrouillage dont l'axe est perpendiculaire au plan médian longitudinal vertical et logeant simultanément dans un premier alésage de l'âme et dans un deuxième alésage du coulisseau, et un deuxième axe de verrouillage dont l'axe est perpendiculaire au plancher et logeant simultanément dans un troisième alésage de l'aile et dans un quatrième alésage du coulisseau.

Avantageusement, l'aéronef comporte des arceaux et des poutres de renfort, où chaque poutre de renfort est fixée entre le plancher et un arceau.

Avantageusement, les moyens de fixation comportent un palan monté articulé en son milieu sur le châssis au niveau du plan médian longitudinal vertical, et où chaque extrémité du palan est montée articulée à une première extrémité d'une bielle intermédiaire.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une représentation schématique en perspective d'un réservoir et de moyens de fixation mis en œuvre dans l'invention,
Fig. 3 est une représentation schématique en vue de côté du réservoir et des moyens de fixation,
Fig. 4 est une vue en perspective des moyens de fixation,
Fig. 5 est une vue de face du réservoir et des moyens de fixation,
Fig. 6 est une vue en coupe des moyens de fixation par le plan VI de la Fig. 2, et
Fig. 7 est un agrandissement d'un détail des moyens de fixation.

### EXPOSÉ DÉTAILLÉ DE MODES DE RÉALISATION

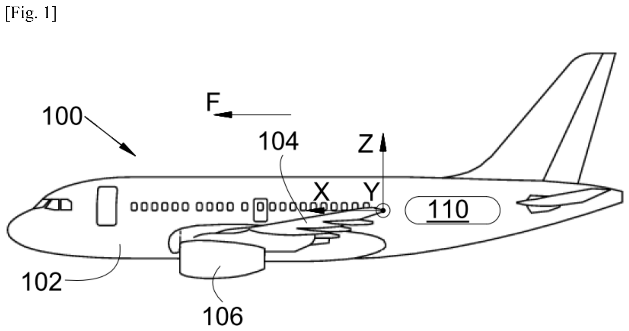

Dans la description qui suit, les termes relatifs à une position sont pris en référence à un aéronef en position normale de vol, c'est-à-dire tel que représenté sur la Fig. 1. La flèche F indique la direction en marche avant de l'aéronef 100.

La Fig. 1 montre un aéronef 100 qui comporte un fuselage 102 de chaque côté duquel est fixée une aile 104 qui porte au moins un moteur 106 fonctionnant avec du carburant comme le dihydrogène ou le kérosène.

Le carburant est stocké dans au moins un réservoir 110 qui est logé et fixé à l'intérieur du fuselage 102 et ici à l'arrière du fuselage 102 par des moyens de fixation.

Dans la description, il est fait mention d'un seul réservoir 110, mais il peut y en avoir plusieurs, et en particulier deux qui sont disposés de part et d'autre du plan médian vertical de l'aéronef 100 ou l'un derrière l'autre.

Le réservoir 110 prend une forme de révolution autour d'un axe de révolution et il présente une section de forme circulaire ou elliptique.

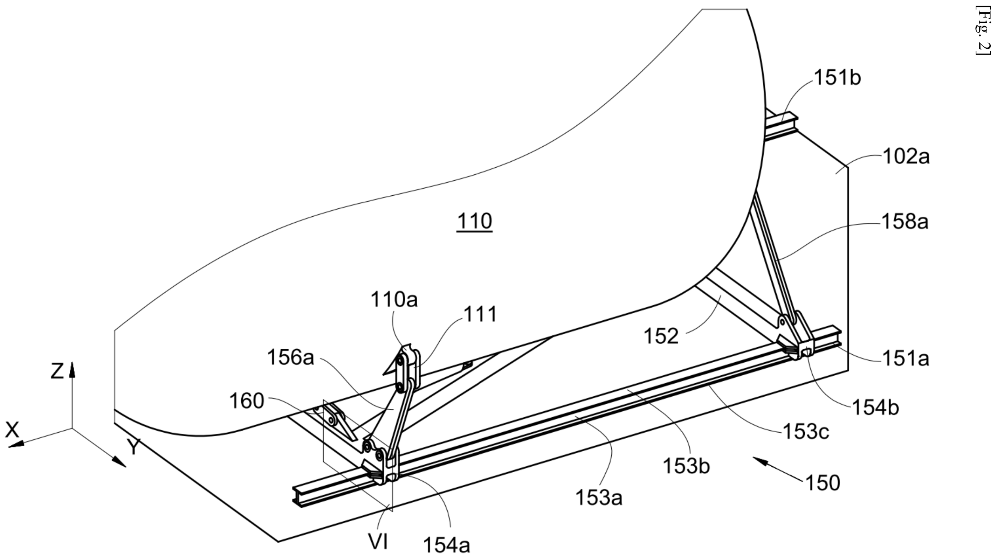

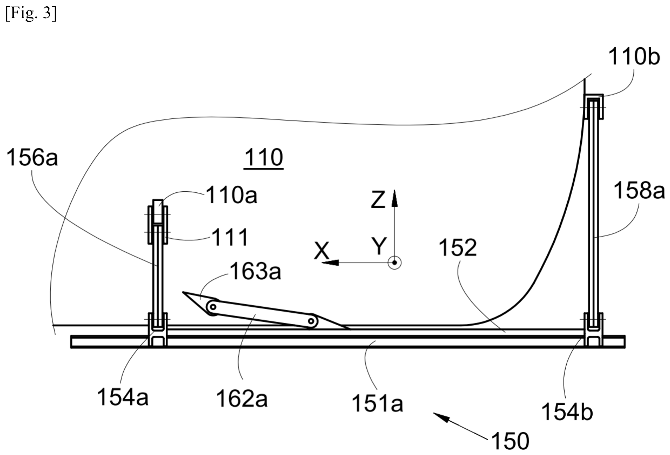

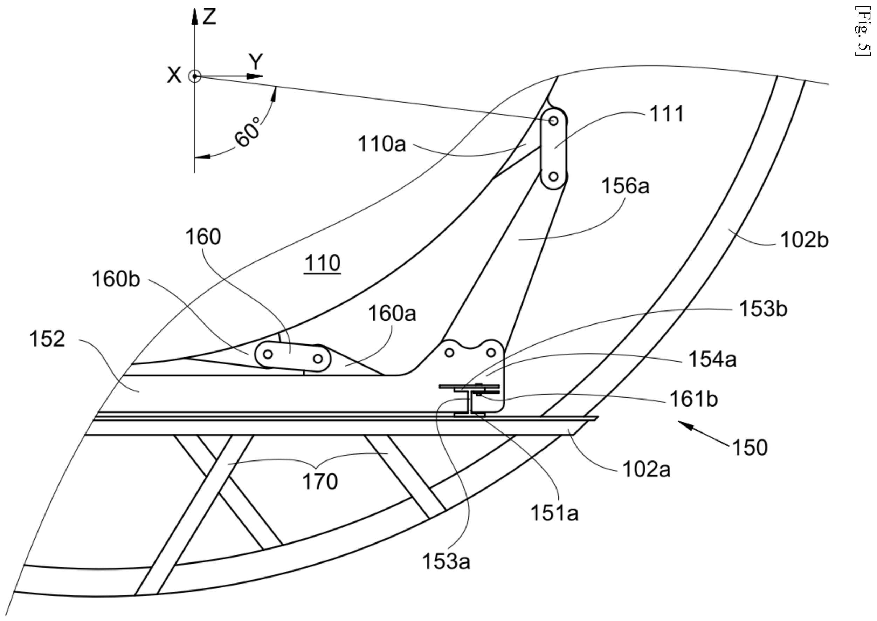

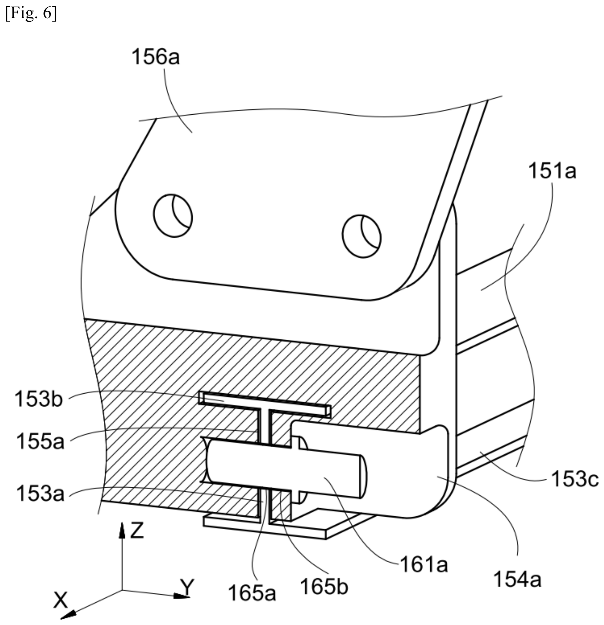

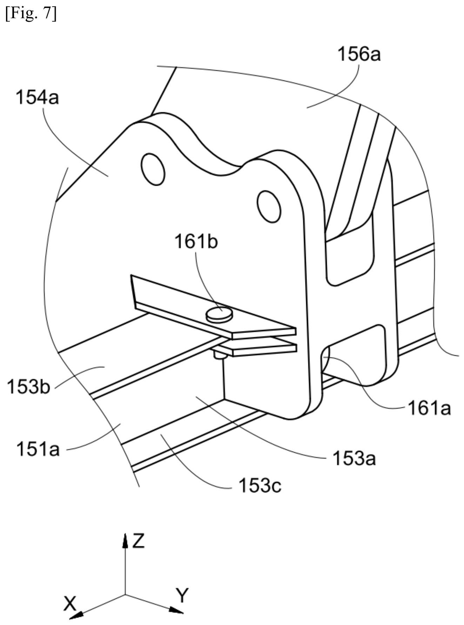

Dans la description qui suit, et par convention, on appelle X la direction longitudinale et horizontale du réservoir 110 passant par l'axe de révolution du réservoir 110, on appelle Y la direction transversale et horizontale et Z la direction verticale, ces trois directions X, Y et Z étant orthogonales entre elles. Le réservoir 110 présente également un plan médian longitudinal vertical XZ qui contient la direction longitudinale X et la direction verticale Z. La direction longitudinale X est globalement parallèle à l'axe longitudinal de l'aéronef 100. Les Figs. 2 à 7 montrent le réservoir 110 et les moyens de fixation 150 qui assurent la fixation du réservoir 110 à un plancher 102a du fuselage 102. Comme le montre la Fig. 5, le plancher 102a est classiquement fixé à des arceaux 102b du fuselage 102 qui s'étendent autour de la direction longitudinale de l'aéronef 100 et les uns à la suite des autres le long de la direction longitudinale de l'aéronef 100. Classiquement, une peau du fuselage 102 est fixée à l'extérieur des arceaux 102b.

Le réservoir 110 est logé dans le fuselage 102 et au-dessus du plancher 102a.

Les moyens de fixation 150 comportent des premiers moyens de guidage 151a-b qui sont fixés sur le plancher 102a.

Les premiers moyens de guidage 151a-b prennent ici la forme de deux rails parallèles à la direction longitudinale X et disposés l'un à côté de l'autre et de part et d'autre du plan médian longitudinal vertical XZ. Chaque rail présente une âme 153a qui s'étend verticalement dans un plan qui est perpendiculaire au plancher 102a et qui est parallèle à la direction longitudinale X. Chaque rail présente également une aile 153b qui est solidaire de l'âme 153a et qui s'étend horizontalement dans un plan parallèle au plancher 102a, ici au sommet de l'âme 153a.

Dans le mode de réalisation de l'invention, l'aile 153b s'étend de part et d'autre de l'âme 153a, mais elle pourrait être d'un seul côté.

Ici, chaque rail a un profil en I avec une aile inférieure 153c qui est fixée au plancher 102a. D'une manière générale, l'âme 153a est fixée au plancher 102a par tous moyens appropriés comme des éléments de visserie fixant l'aile inférieure 153c.

Les moyens de fixation 150 comportent également un châssis 152 qui présente des deuxièmes moyens de guidage 154a-b qui coopèrent avec les premiers moyens de guidage 151a-b pour réaliser une liaison glissière parallèle à la direction longitudinale X. Comme décrit ci-dessous, le réservoir 110 est fixé sur le châssis 152 et il est ainsi possible de le déplacer en faisant coulisser le châssis 152 sur les premiers moyens de guidage 151a-b en cas de besoin.

Dans le mode de réalisation de l'invention présenté ici, les deuxièmes moyens de guidage 154a-b prennent la forme de coulisseaux intégrés au châssis 152. Pour chaque rail, il y a deux coulisseaux. Il y a ainsi, deux coulisseaux bâbord et deux coulisseaux tribord, c'est-à-dire de part et d'autre du plan médian longitudinal vertical XZ, et parmi les coulisseaux bâbord, respectivement tribord, il y a un coulisseau avant et un coulisseau arrière.

Chaque coulisseau est monté coulissant sur le rail associé et ici, chaque coulisseau présente une rainure 155a, en particulier une rainure en T, arrangée pour recevoir l'âme 153a et l'aile 153b.

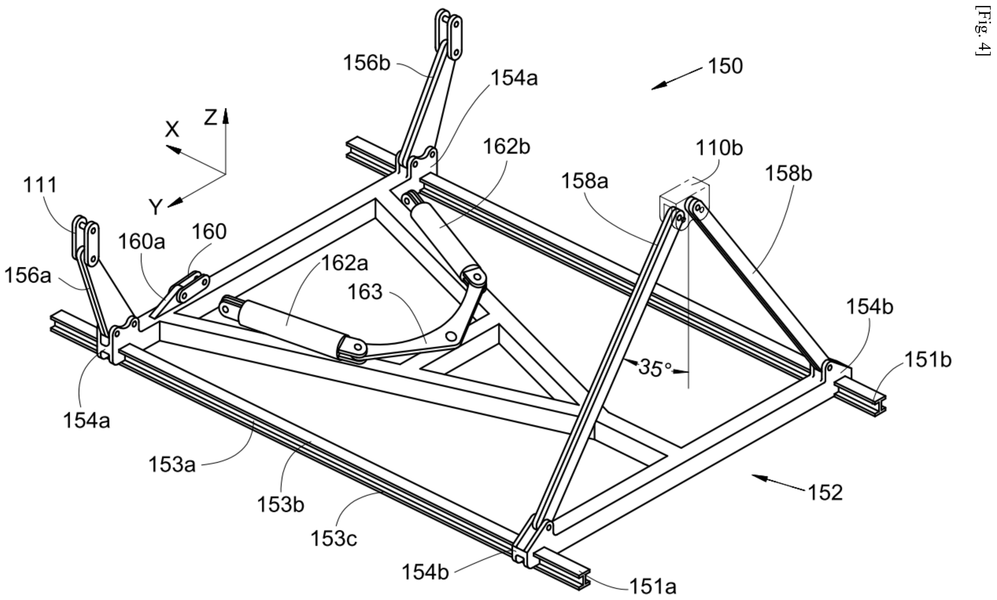

À l'arrière du réservoir 110, les moyens de fixation 150 comportent de part et d'autre du plan médian longitudinal vertical XZ, une bielle arrière 158a-b. Il y a ainsi deux bielles arrière 158a-b et chacune présente une première extrémité qui est montée articulée sur le châssis 152 et une deuxième extrémité qui est montée articulée sur le réservoir 110 ici par l'intermédiaire d'une chape arrière 110b (en traits fantômes sur la Fig. 4). Chaque articulation prend ici la forme d'une rotation autour d'un axe parallèle à la direction longitudinale X et ici les deuxièmes extrémités sont fixées globalement au niveau de la direction longitudinale X du réservoir 110.

Les bielles arrière 158a-b assurent le transfert des efforts selon la direction verticale Z et la direction transversale Y et sont disposées derrière le réservoir 110. Selon un mode de réalisation particulier, chaque bielle arrière 158a-b présente, avec le plan médian longitudinal vertical XZ, un angle de 35° ± 5°.

À l'avant par rapport aux bielles arrière 158a-b, les moyens de fixation 150 comportent de part et d'autre du plan médian longitudinal vertical XZ, une bielle avant 156a-b. Chaque bielle avant 156a-b présente une première extrémité qui est fixée au châssis 152 et une deuxième extrémité qui est montée articulée sur le réservoir 110. Les bielles avant 156a-b assurent le transfert des efforts selon la direction verticale Z et elles sont ici entre le réservoir 110 et le plancher 102a.

Chaque deuxième extrémité est montée articulée sur une palette latérale 110a du réservoir 110, ici par l'intermédiaire d'une biellette intermédiaire 111 montée articulée entre la palette latérale 110a et la deuxième extrémité. Chaque articulation prend ici la forme d'une rotation autour d'un axe parallèle à la direction longitudinale X. Selon un mode de réalisation particulier, le point de fixation à la palette latérale 110a présente, avec le plan médian longitudinal vertical XZ, un angle de 60° ± 5°. Cette fixation est ainsi plutôt vers le dessous du réservoir 110 et sur les côtés par rapport au plan médian longitudinal vertical XZ.

Entre les bielles avant 156a-b et les bielles arrière 158a-b, les moyens de fixation 150 comportent une bielle latérale 160. Ici, la bielle latérale 160 est entre les bielles avant 156a-b, mais elle peut être déplacée plus en arrière. La bielle latérale 160 assure le transfert des efforts selon la direction transversale Y et ici la bielle latérale 160 est arrangée sous le réservoir 110. La bielle latérale 160 présente une première extrémité qui est montée articulée sur le châssis 152 et une deuxième extrémité qui est montée articulée sur une partie inférieure du réservoir 110. Chaque articulation prend ici la forme d'une rotation autour d'un axe parallèle à la direction longitudinale X.

Ici, la première extrémité de la bielle latérale 160 est fixée au châssis 152 par l'intermédiaire d'une première palette 160a du châssis 152 et la deuxième extrémité de la bielle latérale 160 est fixée à une partie inférieure du réservoir 110, ici par l'intermédiaire d'une deuxième palette 160b du réservoir 110.

La bielle latérale 160 est globalement parallèle à la direction transversale Y et sous le réservoir 110.

Entre la bielle latérale 160 et les bielles arrière 158a-b, les moyens de fixation 150 comportent de part et d'autre du plan médian longitudinal vertical XZ, une bielle intermédiaire 162a-b. Il y a ainsi deux bielles intermédiaires 162a-b et chacune présente une première extrémité qui est montée articulée sur le châssis 152 et une deuxième extrémité qui est montée articulée sur le réservoir 110.

Les bielles intermédiaires 162a-b assurent le transfert des efforts selon la direction longitudinale X et elles sont sous le réservoir 110. Dans le mode de réalisation de l'invention représenté à la Fig. 5, les bielles intermédiaires 162a-b ne sont pas doublées, mais dans un autre mode de réalisation non représenté, les bielles intermédiaires 162a-b peuvent être doublées pour des raisons de redondance. Il y a alors de part et d'autre du plan médian longitudinal vertical XZ, deux bielles intermédiaires 162a-b.

Ici, la deuxième extrémité de la bielle intermédiaire 162a-b est fixée au réservoir 110 par l'intermédiaire d'une palette intermédiaire 163a du réservoir 110.

Les articulations des deuxièmes extrémités des bielles intermédiaires 162a-b sont ici des rotations autour d'un axe globalement parallèle à la direction verticale Z.

Un tel arrangement permet une fixation isostatique du réservoir 110 au châssis 152. Une telle fixation évite le transfert des efforts provenant du fuselage 102 vers le réservoir 110 tout en assurant le transfert des efforts du châssis 152 vers le fuselage 102. En outre, un tel arrangement permet de déplacer le réservoir 110 le long de la direction longitudinale X en cas de besoin.

Selon un mode de réalisation particulier, le point de fixation à la palette intermédiaire 163a présente, avec le plan médian longitudinal vertical XZ, un angle de 20° ± 5°. Cette fixation est ainsi plutôt vers le dessous du réservoir 110 et légèrement sur les côtés par rapport au plan médian longitudinal vertical XZ.

Les bielles intermédiaires 162a-b sont inscrites ici dans un plan globalement perpendiculaire à la direction verticale Z et globalement horizontal, c'est-à-dire globalement parallèle au plancher 102a.

Les bielles avant 156a-b sont inscrites ici dans un plan perpendiculaire à la direction longitudinale X, c'est-à-dire vertical.

De la même manière, les bielles arrière 158a-b et la bielle latérale 160 sont inscrites ici dans un plan perpendiculaire à la direction longitudinale X.

Pour des raisons de redondance, chaque bielle et/ou biellette est une bielle double, c'est-à-dire deux bielles identiques en parallèle.

La fixation de chaque bielle/biellette est réalisée ici par une liaison chape constituée d'une chape femelle et d'une chape mâle insérée et fixée dans la chape femelle par mise en place d'un arbre dont l'axe est parallèle à l'axe d'articulation correspondant.

Dans le mode de réalisation de l'invention présenté plus particulièrement à la Fig. 4, les moyens de fixation 150 comportent un palan 163 qui assure la fixation des premières extrémités des bielles intermédiaires 162a-b au châssis 152 et permet un transfert des efforts selon la direction longitudinale X.

Le palan est monté articulé en son milieu sur le châssis 152 au niveau du plan médian longitudinal vertical XZ par une liaison pivot dont l'axe est globalement parallèle à la direction verticale Z, c'est-à-dire perpendiculaire au plancher 102a.

Chaque extrémité du palan 163 est montée articulée à une première extrémité d'une bielle intermédiaire 162a-b par une liaison pivot dont l'axe est globalement parallèle à la direction verticale Z. À cette fin, la première extrémité de chaque bielle intermédiaire 162a-b prend la forme d'une chape femelle dans laquelle est inséré et fixé par la mise en place d'un arbre, le palan 163 formant une chape mâle.

Pour assurer le blocage en translation du châssis 152 par rapport aux premiers moyens de guidage 151a-b, les moyens de fixation 150 comportent des moyens d'arrêt amovibles. Les moyens d'arrêt comprennent pour chaque coulisseau, un premier axe de verrouillage 161a et un deuxième axe de verrouillage 161b.

Chaque premier axe de verrouillage 161a présente son axe perpendiculairement au plan médian longitudinal vertical XZ, c'est-à-dire horizontalement, et assure également le transfert des efforts selon la direction longitudinale X et la direction verticale Z.

Chaque deuxième axe de verrouillage 161b présente son axe perpendiculairement au plancher 102a, c'est-à-dire verticalement, et assure également le transfert des efforts selon la direction transversale Y.

Chaque premier axe de verrouillage 161a loge simultanément dans un premier alésage 165a de l'âme 153a et dans un deuxième alésage 165b du coulisseau correspondant. Le deuxième alésage 165b s'étend de part et d'autre de l'âme 153a et est coaxial avec le premier alésage 165a. Lorsque le premier axe de verrouillage 161a est mis en place et bloqué dans les alésages 165a-b, il bloque le châssis 152. Tout déplacement du châssis 152 doit ensuite être précédé d'un retrait de chaque premier axe de verrouillage 161a.

De la même manière, chaque deuxième axe de verrouillage 161b loge simultanément dans un troisième alésage de l'aile 153b et dans un quatrième alésage du coulisseau correspondant. Le deuxième alésage 165b s'étend de part et d'autre de l'aile 153b et est coaxial avec le troisième alésage. Lorsque le deuxième axe de verrouillage 161b est mis en place et bloqué dans les alésages, il bloque le châssis 152. Tout déplacement du châssis 152 doit ensuite être précédé d'un retrait de chaque deuxième axe de verrouillage 161b.

Chaque premier axe de verrouillage 161a et deuxième axe de verrouillage 161b traversent la rainure 155a lorsqu'ils sont en position de blocage. Le maintien des axes de verrouillage 161a-b s'effectue par exemple par enfoncement en force, vissage dans le coulisseau, ou autres.

Pour assurer le transfert des efforts du réservoir 110 vers la structure de l'aéronef 100 en cas de crash et ainsi éviter les déformations du réservoir 110, l'aéronef 100 comporte des poutres de renfort 170 et chaque poutre de renfort 170 est fixée entre le plancher 102a et un arceau 102b. Ainsi, les efforts venant du réservoir 110 sont transférés à travers les poutres de renfort 170 vers les arceaux 102b.

## Revendications

1. Aéronef (100) comportant :
- un fuselage (102) avec un plancher (102a),
- un réservoir (110) logé dans le fuselage (102) au-dessus du plancher (102a), et présentant une direction longitudinale (X) et un plan médian longitudinal vertical (XZ),
- des moyens de fixation (150) qui assurent la fixation du réservoir (110) au plancher (102a) et qui comportent :
- des premiers moyens de guidage (151a-b) fixés sur le plancher (102a),
- un châssis (152) comportant des deuxièmes moyens de guidage (154a-b) coopérant avec les premiers moyens de guidage (151a-b) pour réaliser une liaison glissière parallèle à la direction longitudinale (X),
- à l'arrière du réservoir (110), de part et d'autre du plan médian longitudinal vertical (XZ), une bielle arrière (158a-b) dont une première extrémité est montée articulée sur le châssis (152) et dont une deuxième extrémité est montée articulée sur le réservoir (110),
- à l'avant par rapport aux bielles arrière (158a-b), de part et d'autre du plan médian longitudinal vertical (XZ), une bielle avant (156a-b) dont une première extrémité est fixée au châssis (152) et dont une deuxième extrémité est montée articulée sur le réservoir (110),
- entre les bielles avant (156a-b) et les bielles arrière (158a-b), une bielle latérale (160) dont une première extrémité est montée articulée sur le châssis (152) et dont une deuxième extrémité est montée articulée sur une partie inférieure du réservoir (110), et
- entre la bielle latérale (160) et les bielles arrière (158a-b), de part et d'autre du plan médian longitudinal vertical (XZ), une bielle intermédiaire (162a-b) dont une première extrémité est montée articulée sur le châssis (152) et dont une deuxième extrémité est montée articulée sur le réservoir (110).

2. Aéronef (100) selon la revendication 1, **caractérisé en ce que** chaque bielle intermédiaire (162a-b) est inscrite dans un plan globalement parallèle au plancher (102a).

3. Aéronef (100) selon l'une des revendications 1 ou 2, **caractérisé en ce que** les bielles avant (156a-b) sont inscrites dans un plan perpendiculaire à la direction longitudinale (X).

4. Aéronef (100) selon l'une des revendications 1 à 3, **caractérisé en ce que** les bielles arrière (158a-b) sont inscrites dans un plan perpendiculaire à la direction longitudinale (X).

5. Aéronef (100) selon l'une des revendications 1 à 4, **caractérisé en ce que** la bielle latérale (160) est inscrite dans un plan perpendiculaire à la direction longitudinale (X).

6. Aéronef (100) selon l'une des revendications 1 à 5, **caractérisé en ce que** chaque bielle est une bielle double.

7. Aéronef (100) selon l'une des revendications 1 à 6, **caractérisé en ce que** les premiers moyens de guidage (151a-b) prennent la forme de deux rails parallèles à la direction longitudinale (X), où chaque rail présente une âme (153a) s'étendant dans un plan perpendiculaire au plancher (102a) et parallèle à la direction longitudinale (X) et une aile (153b) solidaire de l'âme (153a) s'étendant dans un plan parallèle au plancher (102a), et **en ce que** les deuxièmes moyens de guidage (154a-b) prennent, pour chaque rail, la forme de deux coulisseaux montés coulissants sur ledit rail, où chaque coulisseau présente une rainure (155a) arrangée pour recevoir l'âme (153a) et l'aile (153b).

8. Aéronef (100) selon la revendication 7, **caractérisé en ce que** les moyens de fixation (150) comportent pour chaque coulisseau, un premier axe de verrouillage (161a) dont l'axe est perpendiculaire au plan médian longitudinal vertical (XZ) et logeant simultanément dans un premier alésage (165a) de l'âme (153a) et dans un deuxième alésage (165b) du coulisseau, et un deuxième axe de verrouillage (161b) dont l'axe est perpendiculaire au plancher (102a) et logeant simultanément dans un troisième alésage de l'aile (153b) et dans un quatrième alésage du coulisseau.

9. Aéronef (100) selon l'une des revendications 1 à 8, **caractérisé en ce qu'**il comporte des arceaux (102b) et des poutres de renfort (170), où chaque poutre de renfort (170) est fixée entre le plancher (102a) et un arceau (102b).

10. Aéronef (100) selon l'une des revendications 1 à 9, **caractérisé en ce que** les moyens de fixation (150) comportent un palan (163) monté articulé en son milieu sur le châssis (152) au niveau du plan médian longitudinal vertical (XZ) et où chaque extrémité du palan (163) est montée articulée à une première extrémité d'une bielle intermédiaire (162a-b).
